# FASCICULE DE BREVET EUROPEEN

(11) **EP 4 511 629 B1**
(45) Date de publication et mention de la délivrance du brevet: **06.08.2025**
(21) Numéro de dépôt: 23720864.0
(22) Date de dépôt: 20.04.2023
(51) Int. Cl.: G01M 15/14

(54) **BANC D'ESSAI POUR TURBOMACHINE**
PRÜFSTAND FÜR EINE TURBOMASCHINE
TEST BENCH FOR A TURBOMACHINE

(30) Priorité: 20.04.2022 BE 202205289
(43) Date de publication de la demande: 26.02.2025
(73) Titulaire: Safran Aero Boosters, 4041 Herstal (BE)
(72) Inventeur: WEBER, Anthony, Denis, Serge, 4041 Herstal (BE); MORHET, Jerôme, 4041 Herstal (BE)
(74) Mandataire: Ipsilon Benelux
(86) Numéro de dépôt international: PCT/EP2023/060221
(87) Numéro de publication internationale: WO 2023/203113

(56) Documents cités:
- EP-A2- 3 599 453
- WO-A1-2021/009226
- US-A1- 2015 177 105

## Description

### Domaine technique

L'invention concerne le domaine des turbomachines et plus particulièrement les bancs d'essais pour turboréacteurs d'aéronefs.

### Technique antérieure

Les opérations de certification dans le domaine de l'aéronautique sont souvent complexes de par la nature des matériels à certifier et des normes qu'il convient de suivre.

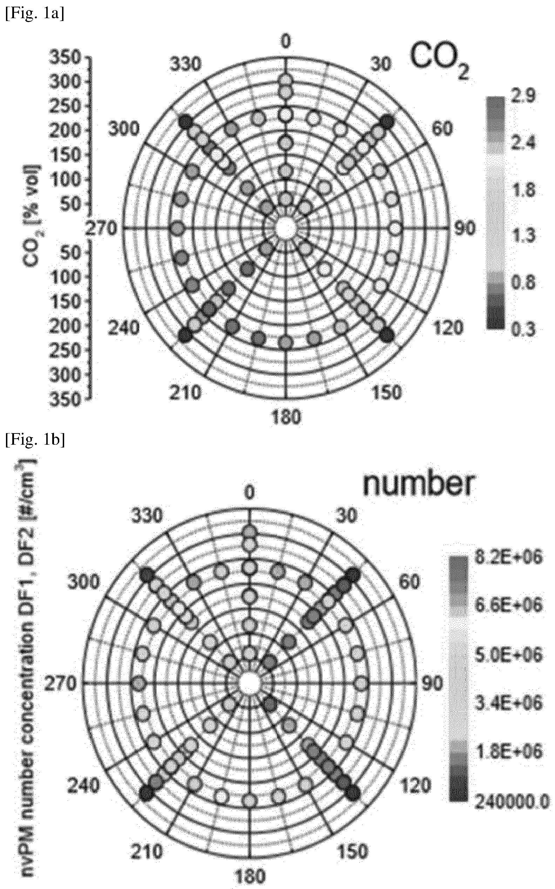

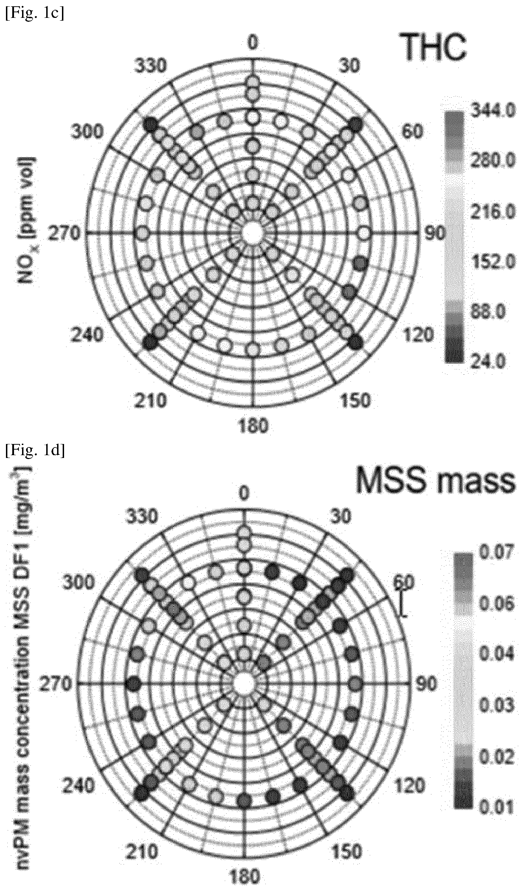

Ainsi, la certification d'un nouveau modèle de turbomachine nécessite le passage de la turbomachine dans un banc et la réalisation d'un cycle de fonctionnement normalisé au cours duquel différentes mesures sont effectuées. L'Organisation de l'Aviation Civile Internationale requiert (Annexe 16 volume II des « Normes et Pratiques Recommandées ») notamment la mesure des émissions polluantes (Nox, CO₂, CO, particules fines (nvPM), HC, SOx, etc.) et l'établissement d'une cartographie des émissions dans un plan perpendiculaire à l'axe de rotation de la turbomachine. Les figures 1a-d illustrent un exemple d'une telle cartographie. Cette cartographie est obtenue en utilisant une sonde qui est localisée en aval de la tuyère d'échappement de la turbomachine. La sonde prélève un flux d'air qui est subdivisé en plusieurs flux, chacun des flux atteignant différents capteurs et/ou filtres. Il est ainsi possible de mesurer différents polluants de façon non intrusive. La sonde est successivement déplacée pour mesurer les émissions en divers endroits.

Le flux d'air en sortie de la turbomachine se présente à une vitesse et une température élevées. Une telle instrumentation est complexe à mettre en œuvre et est onéreuse. Tous les bancs d'essai n'en sont donc pas équipés.

Or, il peut être intéressant de mesurer les émissions polluantes d'une turbomachine au cours de son exploitation, et donc après sa certification. Puisque les contraintes liées à la certification ne s'appliquent plus au stade des contrôles de maintenance réguliers, il est possible d'imaginer y utiliser un système plus simple et donnant un degré de détails moindre.

Il existe donc un besoin de développer une instrumentation de conception plus simple et moins onéreuse à des fins de contrôle régulier des émissions polluantes d'une turbomachine.

### Résumé de l'invention

L'invention a pour objectif de proposer une instrumentation permettant la mesure des émissions d'une turbomachine lors de son cycle de vie, de manière simple et non onéreuse. L'invention a également pour objectif de proposer le procédé de mesure correspondant.

L'invention a pour objet un banc d'essai comprenant une zone d'installation d'une turbomachine, le banc étant remarquable en ce qu'il comprend un capteur amont mesurant la quantité de particules dans l'air en amont de la zone d'installation ; un capteur aval mesurant la quantité de particules dans l'air en aval de la zone d'installation ; et une unité de calcul opérant une différence entre la quantité de particules aval et la quantité de particules amont.

Un tel dispositif permet de mesurer les émissions produites par la turbomachine de manière simple. Le haut degré de détails requis pour la certification n'étant plus indispensable pour des contrôles de routines, il n'est pas problématique de mesurer les émissions de façon globale sans établir une cartographie détaillée.

Selon un mode de réalisation avantageux de l'invention, le banc comprend une cheminée d'entrée d'air et une cheminée de sortie d'air, la zone d'installation étant disposée dans un couloir agencé entre les cheminées. Selon un mode de réalisation avantageux, le capteur amont est agencé dans la cheminée d'entrée et/ou le capteur aval est agencé dans la cheminée de sortie. Ceci permet une mesure globale du flux à bonne distance de la turbomachine.

Selon un mode de réalisation avantageux de l'invention, les particules mesurées par les capteurs sont : des particules fines ; des Nox ; du CO ; et/ou du CO₂. Les particules fines peuvent être des nvPM (« non-volatile particulate matter »). Il est entendu que d'autres particules, polluantes ou non, peuvent également être détectées selon les mêmes principes, par exemple HC, SOx, etc.

Les émissions mesurées peuvent être exprimées en quantité de particules (nombre, taux, masse, etc.) par unité de flux d'air (m3, kg, m3/s, etc.) et/ou par unité de temps.

L'invention porte également sur un procédé de mesure du niveau d'émissions d'une turbomachine, remarquable en ce qu'il comprend une étape de mise en place de la turbomachine dans la zone d'installation d'un banc selon l'un des modes de réalisation ci-dessus, et une étape de fonctionnement de la turbomachine durant laquelle l'unité de calcul effectue un suivi de la différence entre la quantité de particules aval et la quantité de particules amont.

Selon un mode de réalisation avantageux de l'invention, l'étape de fonctionnement consiste à imposer un cycle de fonctionnement avec différents régimes moteur à la turbomachine et à dresser, via l'unité de calcul, une corrélation entre les régimes moteur et la quantité de particules émises.

La turbomachine est préférentiellement sollicitée à différents régimes pendant des durées suffisantes pour lisser les effets imputables à des phases transitoires inter-régimes.

Selon un mode de réalisation avantageux de l'invention, l'unité de calcul détermine une émission moyenne au cours de l'étape de fonctionnement.

L'invention porte également sur une méthode de surveillance de l'état d'une turbomachine, remarquable en ce qu'elle comprend la réitération du procédé selon l'un des modes de réalisation ci-dessus, à différents moments de la durée de vie de la turbomachine.

Selon un mode de réalisation avantageux de l'invention, la méthode comprend la réitération du procédé ci-dessus pour plusieurs turbomachines comparables, et l'enregistrement des données de toutes les turbomachines dans une base de données commune.

Par « turbomachines comparables », on entend des turbomachines du même type ou d'une conception suffisamment voisine pour qu'il soit attendu d'elles qu'elles aient un comportement similaire en termes d'émissions polluantes sur toute leur durée de vie.

Selon un mode de réalisation avantageux de l'invention, la méthode comprend une étape d'interpolation des émissions mesurées au cours de la vie des turbomachines pour déterminer une corrélation entre tout moment donné de la durée de vie d'une turbomachine et l'émission moyenne de polluants produits à ce moment donné.

En surveillant plusieurs turbomachines, il est en effet possible d'établir une loi reliant le nombre d'heures en fonctionnement d'une turbomachine avec les émissions polluantes. Au cours de la vie d'une turbomachine, il est observé que ses émissions peuvent augmenter de façon régulière. Une augmentation anormalement élevée peut être le signe d'une détérioration inhabituelle.

Selon un mode de réalisation avantageux de l'invention, lorsqu'une turbomachine présente des émissions mesurées qui dépassent de plus de 20% l'émission moyenne corrélée à ce moment de sa durée de vie, la turbomachine est mise en révision, mise au rebut ou est inspectée pour rechercher une détérioration.

L'invention porte également sur une méthode de surveillance de l'état d'une turbomachine, remarquable en ce qu'elle comprend le procédé selon l'un des modes de réalisations exposés ci-dessus ainsi qu'une étape d'analyse, de diagnostic, ou d'action pour identifier/contrôler une turbomachine dont les émissions polluantes seraient supérieures à un seuil réglementaire ou un seuil établi par corrélation entre les émissions polluantes et une détérioration de la turbomachine.

Le seuil règlementaire peut être un seuil légalement défini.

Les actions à mener peuvent viser l'inspection, la réparation, le retrait du service, etc.

La corrélation peut être établie après une collecte de données suffisantes pour établir un lien de cause à effet entre augmentation des émissions et par exemple réelle détérioration d'un composant, ou du moteur.

### Brève description des dessins

Les figures 1a-1d représentent le produit d'une méthode connue : un exemple de cartographie obtenue par une sonde déplaçable ;
La [Fig.2] montre un banc d'essai selon l'invention ;
La [Fig.3] montre un exemple de résultats obtenus avec le banc de l'invention ;
La [Fig.4] montre une méthode selon l'invention.

### Description des modes de réalisation

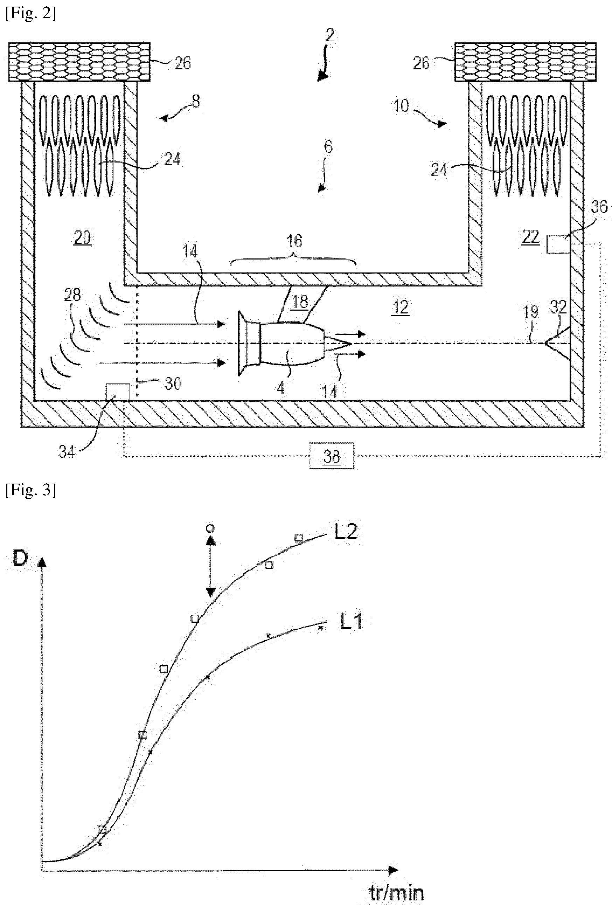

Les figures 1a-d montrent des illustrations de cartographies de plusieurs types d'émissions pour la certification d'une turbomachine. Ces cartographies sont obtenues par une sonde qui est successivement déplacée en différents points d'un plan perpendiculaire à l'axe de la turbomachine (noté 19 sur la [Fig.2]) et qui y effectue une mesure ponctuelle.

Ces figures illustrent bien la complexité de la procédure à effectuer. Le degré de détail requis permet de valider une architecture de moteur. Les différentes positions utilisées pour les mesures permettent de s'affranchir d'une erreur de mesure qui pourrait être liée à une position unique et mal appropriée de la sonde.

Lors d'un entretien courant, s'il peut être utile d'obtenir une idée du niveau de pollution de la turbomachine, un niveau de détails comparable serait superflu et une telle procédure rallongerait inutilement les durées d'immobilisation de la turbomachine et les coûts engagés.

L'invention propose donc une instrumentation telle que celle représentée sur la [Fig.2]. Cette figure représente de manière simplifiée un banc d'essai 2 de moteur, plus particulièrement un banc d'essai 2 pour turboréacteur 4 d'avion. Le banc d'essai 2 pourrait éventuellement recevoir un avion complet, ou du moins une partie d'avion.

Le banc d'essai 2 forme une construction avec une infrastructure. Il comprend un passage d'air 6 avec une entrée 8 et une sortie 10. Le passage 6 comprend un couloir 12 essentiellement allongé. Sa longueur peut être supérieure ou égale à 60 m. La longueur du couloir 12 permet la circulation d'un flux d'air laminaire 14.

Afin de limiter la résistance à l'écoulement au travers du couloir 12, en particulier la résistance s'opposant à l'entrée d'un flux d'air 14 dans la turbomachine 4, le couloir 12 peut présenter une section de passage supérieure ou égale à 50 m². Le flux d'air 14 traversant le banc d'essai 2 peut être entraîné par la turbomachine 4 elle-même pendant sa phase de test. Une zone d'installation 16 de la turbomachine 4 est prévue. La zone d'installation 16 peut être munie d'un système de fixation 18 auquel la turbomachine 4 est fixée pendant son test. Le système 18 peut s'étendre verticalement depuis le plafond du couloir 12, à la manière d'une colonne ou d'un poteau. Le système 18 permet de monter la turbomachine 4 avec un déport, et de centrer cette dernière par rapport au milieu du couloir 12, notamment par rapport à un axe central 19 du couloir 12.

Le couloir 12 peut être délimité par des cheminées verticales 20, 22 en entrée 8 et en sortie 10. Elles permettent une admission d'air et un échappement, tous deux verticaux et en élévation par rapport au couloir 12. Pour réduire les nuisances sonores, elles peuvent comporter des baffles sonores 24, ou lames acoustiques 24, permettant d'absorber des ondes sonores de manière passive.

La configuration en « U » représentée sur la [Fig.2] est un exemple non limitatif de la forme générale du banc d'essai.

Des dispositifs 26 complémentaires peuvent être présents en entrée 8 et en sortie 10 pour éviter des inversions d'écoulements, qui perturberaient les conditions de tests. Le dispositif 26 en sortie de banc peut également être équipé de moyens de dépollution tels que ceux décrits dans le document WO 2021/009226 A1.

A la jonction entre la cheminée amont et le couloir 12, le banc 2 est équipé d'une série de lames de déviation 28. Elles permettent de renvoyer l'air descendant de la cheminée d'entrée 20 dans une direction horizontale. En entrée du couloir 12, le banc 2 présente optionnellement une grille 30 permettant d'intercepter des débris susceptibles de perturber l'essai et d'endommager la turbomachine 4.

Pour dévier le flux issu de l'échappement, un cône 32 peut être agencé au droit de la cheminée de sortie 22, fixé à une paroi verticale en fin de couloir 12. Sa pointe peut coïncider avec l'axe central 19.

Afin de déterminer les émissions polluantes de la turbomachine 4, le banc 2 comprend un capteur amont 34, agencé dans le passage 6 en amont de la turbomachine et un capteur aval 36 agencé en aval de la turbomachine.

Les capteurs 34, 36 mesurent un niveau de particules (par exemple des particules fines nvPM ; des Nox ; du CO ; du CO₂, HC, SOx, etc.). Les capteurs 34 et 36 peuvent être identiques. Il est entendu que le terme « capteur » est à comprendre dans son acception large : les capteurs 34 et 36 peuvent être des unités de mesures qui renvoient un signal représentatif de la quantité d'un ou plusieurs composants parmi ceux évoqués ci-dessus ; chaque capteur 34, 36 peut également être composé de plusieurs détecteurs disposés à plusieurs endroits du banc pour mesurer localement et/ou indépendamment une ou plusieurs quantités de particules.

Le capteur amont 34 mesure le taux de pollution dans le flux d'air *avant* que celui-ci ne s'écoule dans la turbomachine 4. Le capteur aval 36 mesure le taux de pollution dans le flux d'air *après* que celui-ci s'est écoulé dans la turbomachine 4.

Les capteurs 34, 36 sont connectés à une unité de calcul 38 par une connexion filaire ou sans fil. L'unité de calcul 38 perçoit ainsi des signaux correspondant à une quantité de particules en amont « Pam » et en aval de la turbomachine « Pav ». L'unité de calcul 38 effectue une différence D des mesures des deux capteurs (D=Pav-Pam) pour en déduire la contribution de la turbomachine à la pollution de l'air sortant de la turbomachine.

Les capteurs 34, 36 sont illustrés schématiquement sur la [Fig.2] à des positions privilégiées mais non limitatives.

Afin de limiter les incertitudes de mesures inhérentes à un positionnement in-approprié des capteurs, et afin de proposer une mesure globale des phénomènes en jeu, les capteurs 34, 36 peuvent être placés à une distance axiale (selon l'axe 19) de la turbomachine 4 suffisantes. Cette distance peut être d'au moins 10 mètres ou au moins trois fois la longueur de la turbomachine.

Dans un exemple non couvert par les revendications, un seul capteur en aval de la turbomachine est utilisé. Ainsi, pour évaluer le niveau de pollution imputé à la turbomachine, on pourra, (1) soit faire l'hypothèse que l'air amont ne contient pas de particules polluantes et en déduire que la totalité des particules détectées par le capteur 36 est à imputer à la turbomachine, (2) soit effectuer une mesure de référence de la qualité de l'air ambiant avant la mise en fonctionnement de la turbomachine.

La [Fig.3] représente un exemple de résultat qu'il est possible d'obtenir avec le banc d'essai de l'invention. En faisant varier le régime moteur et en mesurant la quantité d'un polluant en particulier, il est possible de relever des points de mesures. Les croix représentent les mesures obtenues pour une turbomachine à un moment de sa durée de vie et les carrés représentent les mesures pour la même turbomachine à un moment ultérieur de sa durée de vie. Il est ainsi possible de dresser une loi L1 et une loi L2 de relation entre le régime moteur et le niveau de polluants attendus, et ce pour chacune des particules mesurées et à chaque étape de la durée de vie de la turbomachine.

Si une mesure (cercle sur le graphique) est effectuée sur une turbomachine comparable au moment L2 de sa durée de vie, et que la valeur relevée est très différente de la courbe L2 attendue, il peut être conclu que la turbomachine en question est détériorée de façon anormale. L'écart seuil qui peut déterminer la mise au rebut ou une action de réparation ou d'inspection peut être par exemple de 20% de la valeur attendue sur la courbe L2.

Le banc d'essai de l'invention permet d'obtenir un faisceau de courbes pour différents polluants en fonction du régime moteur et en fonction de l'âge de la turbomachine. On obtient donc, par interpolation des courbes L1 et L2 (et Ln, n>2), une surface dans un système de coordonnées à trois dimensions. Il est ainsi possible de savoir, pour tout régime moteur et à tout âge de la turbomachine, les polluants qu'il est normal de relever.

Le banc peut aussi calculer une pollution moyenne pour un cycle normalisé, pollution moyenne qui peut servir de référence, en lieu et place, ou en complément, des courbes de régime moteur.

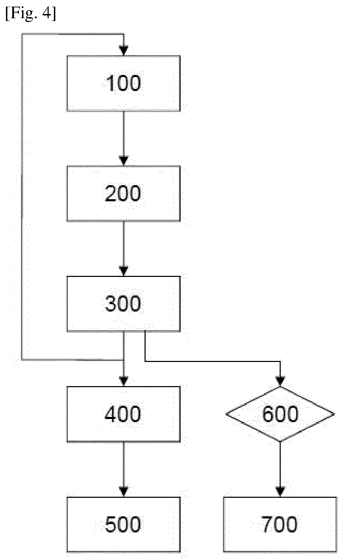

La [Fig.4] illustre une méthode selon l'invention.

La méthode commence par l'installation 100 d'une turbomachine 4 dans le banc d'essai 2. A l'étape 200, la turbomachine suit un cycle de fonctionnement qui peut être composé de différents paliers à différents régimes moteur, et différentes accélérations ou décélérations. A l'étape 300, l'unité de calcul 38 détermine la corrélation entre chaque polluant et le régime moteur (une courbe du type de celle illustrée sur la [Fig.3] ).

Ces trois étapes sont répétées à plusieurs moments de la durée de vie de la turbomachine pour surveiller toute déviance d'une progression normale de l'émission des polluants et/ou pour établir des lois de comportement.

Les trois étapes 100 à 300 sont également répétées pour d'autres turbomachines comparables, c'est-à-dire du même type ou ayant un comportement similaire en termes d'émission polluantes.

Les différentes courbes sont enregistrées dans une base de données commune à l'étape 400.

Plusieurs bancs d'essai peuvent former un réseau de bancs d'essai, chacun ayant accès à cette base de données commune.

Des valeurs moyennes consolidées pour plusieurs turbomachines comparables peuvent être déterminées à l'étape 500. Des interpolations permettent ainsi de déterminer des valeurs attendues pour chaque polluant à tout moment de la durée de vie d'une turbomachine. Il peut ainsi être défini un niveau attendu de pollution moyen, et un niveau de pollution attendu pour chacune des particules, à chaque âge de la turbomachine, et à chaque régime moteur.

Les résultats obtenus à l'étape 300 peuvent être comparés aux résultats attendus dressés à l'étape 500. Si un écart trop important est détecté (comme l'exemple du cercle sur la [Fig.3]) à l'étape 600, alors la machine en question est mise au rebut à l'étape 700 ou est inspectée 700 de manière à détecter le ou les composants de la turbomachine qui nécessitent une action de réparation.

## Revendications

1. Banc d'essai (2) comprenant une zone d'installation (16) d'une turbomachine (4), un capteur amont (34) mesurant la quantité de particules (Pam) dans l'air en amont de la zone d'installation (16); un capteur aval (36) mesurant la quantité de particules (Pav) dans l'air en aval de la zone d'installation (16); et le banc (2) étant **caractérisé en ce qu'**il comprend une unité de calcul (38) opérant une différence (D) entre la quantité de particules aval (Pav) et la quantité de particules amont (Pam).

2. Banc (2) selon la revendication 1, **caractérisé en ce qu'**il comprend une cheminée (20) d'entrée d'air et une cheminée (22) de sortie d'air, la zone d'installation (16) étant disposée dans un couloir (12) agencé entre les cheminées (20, 22), le capteur amont (34) étant agencé dans la cheminée d'entrée (20) et/ou le capteur aval (36) étant agencé dans la cheminée de sortie (22).

3. Banc (2) selon la revendication 1 ou 2, **caractérisé en ce que** les particules mesurées par les capteurs sont: des particules fines; des Nox; du CO; et/ou du CO₂.

4. Procédé de mesure du niveau d'émissions d'une turbomachine (4), **caractérisé en ce qu'**il comprend une étape (100) de mise en place de la turbomachine (4) dans la zone d'installation (16) d'un banc (2) selon l'une des revendications 1 à 3, et une étape (200) de fonctionnement de la turbomachine (4) durant laquelle l'unité de calcul (38) effectue un suivi de la différence (D) entre la quantité de particules aval (Pav) et la quantité de particules amont (Pam).

5. Procédé selon la revendication 4, **caractérisé en ce que** l'étape (200) de fonctionnement consiste à imposer un cycle de fonctionnement avec différents régimes moteur à la turbomachine (4) et à dresser (300), via l'unité de calcul (38), une corrélation entre les régimes moteur et la quantité de particules émises.

6. Procédé selon la revendication 4 ou 5, **caractérisé en ce que** l'unité de calcul (38) détermine une émission moyenne au cours de l'étape de fonctionnement.

7. Méthode de surveillance de l'état d'une turbomachine (4), **caractérisée en ce qu'**elle comprend la réitération du procédé selon l'une des revendications 4 à 6, à différents moments de la durée de vie de la turbomachine (4).

8. Méthode selon la revendication 7, comprenant la réitération du procédé selon l'une des revendications 4 à 6 pour plusieurs turbomachines (4) comparables, et l'enregistrement (400) des données de toutes les turbomachines (4) dans une base de données commune.

9. Méthode selon la revendication 8, **caractérisée par** une étape d'interpolation (500) des émissions mesurées au cours de la vie des turbomachines (4) pour déterminer une corrélation entre tout moment donné de la durée de vie d'une turbomachine (4) et l'émission moyenne de polluants produits à ce moment donné.

10. Méthode selon la revendication 9, **caractérisée en ce que** lorsqu'une turbomachine (4) présente des émissions (D) mesurées qui dépassent de plus de 20% l'émission moyenne corrélée à ce moment de sa durée de vie, la turbomachine (4) est mise en révision, mise au rebut ou est inspectée pour rechercher une détérioration.

11. Méthode de surveillance de l'état d'une turbomachine (4), **caractérisée en ce qu'**elle comprend le procédé selon l'une des revendications 4 à 6, et une étape d'analyse, de diagnostic, ou d'action pour identifier/ contrôler une turbomachine dont les émissions polluantes seraient supérieures à un seuil réglementaire ou un seuil établi par corrélation entre les émissions polluantes et une détérioration de la turbomachine.

## Patentansprüche

1. Prüfstand (2), umfassend eine Installationszone (16) einer Turbine (4), einen stromaufwärts Sensor (34), der die Partikelmenge (Pam) in der Luft stromaufwärts der Installationszone (16) misst; einen stromabwärts Sensor (36), der die Partikelmenge (Pav) in der Luft stromabwärts der Installationszone (16) misst; und der Prüfstand (2) ist **dadurch gekennzeichnet, dass** er eine Recheneinheit (38) umfasst, die eine Differenz (D) zwischen der Partikelmenge (Pav) stromabwärts und der Partikelmenge (Pam) stromaufwärts berechnet.

2. Prüfstand (2) nach Anspruch 1, **gekennzeichnet dadurch, dass** er einen Luftansaugstutzen (20) und einen Luftauslassstutzen (22) umfasst, wobei die Installationszone (16) in einem Kanal (12) angeordnet ist, der zwischen den Stutzen (20, 22) angeordnet ist, wobei der stromaufwärts Sensor (34) im Luftansaugstutzen (20) und/oder der stromabwärts Sensor (36) im Luftauslassstutzen (22) angeordnet ist.

3. Prüfstand (2) nach Anspruch 1 oder 2, **gekennzeichnet dadurch, dass** die von den Sensoren gemessenen Partikel Folgendes sind: Feinstaub; NOx; CO; und/oder CO₂.

4. Verfahren zur Messung des Emissionsniveaus einer Turbine (4), **gekennzeichnet dadurch, dass** es einen Schritt (100) zur Einrichtung der Turbine (4) in der Installationszone (16) eines Prüfstands (2) gemäß einem der Ansprüche 1 bis 3 umfasst, und einen Schritt (200) zum Betrieb der Turbine (4), während dessen die Recheneinheit (38) die Differenz (D) zwischen der stromabwärts Partikelmenge (Pav) und der stromaufwärts Partikelmenge (Pam) verfolgt.

5. Verfahren gemäß Anspruch 4, **gekennzeichnet dadurch, dass** der Schritt (200) des Betriebs darin besteht, einen Betriebszyklus mit verschiedenen Motorbetriebszuständen der Turbine (4) aufzuerlegen und eine Korrelation (300) zwischen den Motorbetriebszuständen und der emittierten Partikelmenge über die Recheneinheit (38) zu erstellen.

6. Verfahren gemäß Anspruch 4 oder 5, **gekennzeichnet dadurch, dass** die Recheneinheit (38) eine durchschnittliche Emission während des Betriebssteps bestimmt.

7. Methode zur Überwachung des Zustands einer Turbine (4), **gekennzeichnet dadurch, dass** sie die Wiederholung des Verfahrens gemäß einem der Ansprüche 4 bis 6 zu verschiedenen Zeitpunkten der Lebensdauer der Turbine (4) umfasst.

8. Verfahren gemäß Anspruch 7, umfassend die Wiederholung des Verfahrens gemäß einem der Ansprüche 4 bis 6 für mehrere vergleichbare Turbinen (4) und das Aufzeichnen (400) der Daten aller Turbinen (4) in einer gemeinsamen Datenbank.

9. Verfahren gemäß Anspruch 8, **gekennzeichnet dadurch, dass** eine Interpolationsstufe (500) der während der Lebensdauer der Turbinen (4) gemessenen Emissionen umfasst, um eine Korrelation zwischen einem beliebigen Zeitpunkt der Lebensdauer einer Turbine (4) und der durchschnittlichen Emission von Schadstoffen zu diesem Zeitpunkt zu bestimmen.

10. Verfahren gemäß Anspruch 9, **gekennzeichnet dadurch, dass**, wenn eine Turbine (4) gemessene Emissionen (D) aufweist, die um mehr als 20 % über der durchschnittlichen, zu diesem Zeitpunkt korrelierten Emission liegen, die Turbine (4) zur Überholung, zur Entsorgung oder zur Inspektion auf mögliche Verschlechterung gebracht wird.

11. Verfahren zur Überwachung des Zustands einer Turbine (4), **gekennzeichnet dadurch, dass** es das Verfahren gemäß einem der Ansprüche 4 bis 6 umfasst und eine Analyse-, Diagnose- oder Handlungsebene zur Identifizierung/Kontrolle einer Turbine umfasst, deren Schadstoffemissionen einen regulatorischen Schwellenwert oder einen durch Korrelation zwischen den Schadstoffemissionen und einer Verschlechterung der Turbine festgelegten Schwellenwert überschreiten.

## Claims

1. Test bench (2) comprising an installation zone (16) of a turbomachine (4), an upstream sensor (34) measuring the quantity of particles (Pam) in the air upstream of the installation zone (16); a downstream sensor (36) measuring the quantity of particles (Pav) in the air downstream of the installation zone (16); and the bench (2) being **characterized in that** it comprises a calculation unit (38) operating a difference (D) between the quantity of downstream particles (Pav) and the quantity of upstream particles (Pam).

2. Bench (2) according to claim 1, **characterized in that** it comprises an air inlet chimney (20) and an air outlet chimney (22), the installation zone (16) being arranged in a corridor (12) arranged between the chimneys (20, 22), the upstream sensor (34) being arranged in the inlet chimney (20) and/or the downstream sensor (36) being arranged in the outlet chimney (22).

3. Bench (2) according to claim 1 or 2, **characterized in that** the particles measured by the sensors are: fine particles; Nox; CO; and/or CO₂.

4. Method for measuring the level of emissions of a turbomachine (4), **characterized in that** it comprises a step (100) of placing the turbomachine (4) in the installation zone (16) of a bench (2) according to any one of claims 1 to 3, and a step (200) of operating the turbomachine (4) during which the calculation unit (38) monitors the difference (D) between the quantity of downstream particles (Pav) and the quantity of upstream particles (Pam).

5. Method according to claim 4, **characterized in that** the operating step (200) consists of imposing an operating cycle with different engine speeds on the turbomachine (4) and of drawing up (300), via the calculation unit (38), a correlation between the engine speeds and the quantity of particles emitted.

6. Method according to claim 4 or 5, **characterized in that** the calculation unit (38) determines an average emission during the operating step.

7. Method for monitoring the condition of a turbomachine (4), **characterized in that** it comprises repeating the method according to any one of claims 4 to 6, at different times during the lifespan of the turbomachine (4).

8. Method according to claim 7, comprising repeating the method according to any one of claims 4 to 6 for several comparable turbomachines (4), and recording (400) the data of all the turbomachines (4) in a common database.

9. Method according to claim 8, **characterized by** a step of interpolation (500) of the emissions measured during the lifespan of the turbomachines (4) to determine a correlation between any given moment of the lifespan of a turbomachine (4) and the average emission of pollutants produced at that given moment.

10. Method according to claim 9, **characterized in that** when a turbomachine (4) has measured emissions (D) which exceed by more than 20% the correlated average emission at that time of its lifespan, the turbomachine (4) is overhauled, scrapped or is inspected to look for deterioration.

11. Method for monitoring the condition of a turbomachine (4), **characterized in that** it comprises the method according to any one of claims 4 to 6, and a step of analysis, diagnosis, or action to identify/control a turbomachine whose pollutant emissions would be higher than a regulatory threshold or a threshold established by correlation between the pollutant emissions and a deterioration of the turbomachine.
